# EUROPEAN PATENT SPECIFICATION

(11) **EP 3 869 163 B1**
(45) Date of publication and mention of the grant of the patent: **14.02.2024**
(21) Application number: 20158480.2
(22) Date of filing: 20.02.2020
(51) Int. Cl.: G01F 1/661, A47L 15/44, D06F 39/02, F16K 7/04, F16K 31/00, F16K 37/00, G01F 1/66, G01F 15/00, A47L 15/42, D06F 39/08

(54) **DEVICE FOR DETECTING A FLOW OF A FLUID OR A PRESENCE OF A FLUID**
VORRICHTUNG ZUR DETEKTION EINER STRÖMUNG EINES FLUIDS ODER EINER PRÄSENZ EINES FLUIDS
DISPOSITIF DE DÉTECTION DE L'ÉCOULEMENT D'UN FLUIDE OU DE LA PRÉSENCE D'UN FLUIDE

(43) Date of publication of application: 25.08.2021
(73) Proprietor: E.G.O. Elektro-Gerätebau GmbH, 75038 Oberderdingen (DE)
(72) Inventor: Thimm, Wolfgang, 76137 Karlsruhe (DE); Schaumann, Uwe, 75038 Oberderdingen (DE)
(74) Representative: Patentanwälte Ruff, Wilhelm, Beier, Dauster & Partner mbB

(56) References cited:
- US-A- 4 966 462
- US-A1- 2010 083 989
- US-A1- 2014 356 078
- US-B2- 10 295 387

## Description

### TECHNICAL FIELD AND PRIOR ART

The invention relates to a device for detecting a flow of a fluid through or a presence of a fluid in a fluid carrying element, such as a pipe, a tube, a valve, a chamber and/or a fitting. The invention further relates to a use of such a device, to a valve system with such a device, and to a dosing unit with a valve system. In addition, the invention relates to a household appliance comprising such a device or a valve system.

In operating water-bearing household appliance, a lack of a fluid in a fluid carrying element due to a mal-functioning of a valve or due to a defect of a fluid carrying element as well as the presence of fluid due to a defect of fluid carrying element can cause severe damage. Typically, solenoid valve devices are used in household appliances, wherein it is known to provide sensor devices for monitoring a functioning of the solenoid valve devices.

US 10,295,387B2 shows a fluid-flow measuring ball valve includes a housing and a ball having an orifice, wherein the ball is moved between an open position allowing fluid flow through the orifice and a closed position preventing fluid flow. A first ultrasonic transducer is positioned in the housing upstream of the ball. A second ultrasonic transducer is positioned in the housing downstream of the ball and both are aligned to send and receive pulses. First and second acoustic reflectors are aligned with the transducers to transmit and reflect ultrasonic signals in at least one direction through the ball orifice when the ball is in an open position. The controller determines the fluid velocity based on measured speed of sound and calculates the volume of fluid through the orifice based on the measured fluid velocity and cross-sectional area.

US 2010/0083989 A shows a detergent dosing system having means for interrogating the fill level of the detergents in a cartridge in order to detect an empty or almost empty cartridge, wherein am interrogation of the fill level can be performed in an optical, capacitive or acoustic manner. For an optical interrogation, a light guide is incorporated in the cartridge, into which light guide is incoupled light by way of a light source present in the detergent dispenser, and a light receiver, which is coupled with the light guide and which is likewise arranged in the detergent dispenser, receives the light outcoupled from the light guide. An evaluation system coupled with the light source and the light receiver can ascertain the fill level or when a predefined fill level is reached in the cartridge on the basis of the incoupled and outcoupled light quantity.

US 2014/0356078 A shows a powder flow monitor that includes a powder transport tube, a sensor of a flow of powder in the powder transport tube, and an oscillator configured to impart a cleaning vibration to the powder transport tube, wherein the sensor comprises a light source configured to illuminate powder particles suspended in fluid in the powder transport tube; a light detector for sensing light emerging from the powder transport tube; and a controller operably connected to the light detector and configured to calculate a feature of the flow of the powder as a function of a light intensity detected from the powder transport tube by the light detector.

US 4,966,462 B shows a method and an apparatus for using the light extinction measurements from two or more light cells positioned along a gasflow chamber in which the gas volumetric rate is known to determine particle number concentration and mass concentration of an aerosol independent of extinction coefficient and to determine estimates for particle size and mass concentrations.

### SUMMARY OF THE INVENTION

It is the object of the present invention to provide a reliable cost-efficient device for detecting a flow of a fluid through or a presence of a fluid in a fluid carrying element, such as a pipe, a tube, a valve, a chamber and/or a fitting. It is a further object of the invention to provide a reliable and cost-efficient valve system with such a device, a dosing unit with a valve system, the use of such a device, and a household appliance with such a device and/or with a valve system.

According to a first aspect, a device for detecting a flow of a fluid through or a presence of a fluid in a fluid carrying element, such as a pipe, a tube, a valve, a chamber and/or a fitting, is provided, which comprises an emitting device configured to emit a wave signal into a fluid, which wave signal is transmittable by the fluid, wherein the emitting device comprises at least one coupling element configured for an injection of the wave signal into the fluid when the receiving device is arranged transverse to a longitudinal extension of the fluid carrying element, and a receiving device configured to receive the wave signal emitted from the emitting device and transmitted by the fluid, wherein the receiving device comprises at least one coupling element configured for an extraction of the wave signal from the fluid when the receiving device is arranged transverse to a longitudinal extension of the fluid carrying element, wherein the emitting device is a light emitting device configured to emit a visible or invisible light signal and the receiving device is a light receiving device configured to receive the light signal emitted from the light emitting device, wherein the at least one coupling element configured for an injection of the wave signal into the fluid is an optical element configured for a light injection into the fluid, and the at least one coupling element configured for an extraction of the wave signal from the fluid is an optical element configured for a light extraction from the fluid

In other words, the invention uses the fluid as a waveguide for a light signal emitted by the emitting device, wherein a light signal transmitted by the fluid and, thus received, by the receiving device can be evaluated for example by comparison with a target signal. The receiving device in one embodiment is provided with a controller for evaluating a signal received, in particular an intensity of a signal received. In other embodiments, the receiving device is communicated with a controller for evaluating signals received by the receiving device. The controller in one embodiment forms part of a central control unit of an appliance.

In embodiments, the at least one coupling element of the emitting device is configured for an injection of the light signal into the fluid when the emitting device is arranged perpendicular to the longitudinal extension of the fluid carrying element.

In alternative or in addition, the least one coupling element of the receiving device is configured for an extraction of the light signal from the fluid when the receiving device is arranged perpendicular to the longitudinal extension of the fluid carrying element.

A wavelength of the light signal can be chosen by the skilled person in accordance with other boundary conditions.

The optical element can be chosen by the skilled person in consideration of a fluid and/or a fluid carrying element. In one embodiment, the optical element is a prism. However, other optical elements are conceivable. This might be for example a grid in combination with a so called MEMS mirror.

In one embodiment, the light emitting device is a light emitting diode (LED) and/or the light detecting device is a light receiving diode. Such diodes are available as inexpensive bulk-ware. In one embodiment, a white light LED of high intensity is used. Typically, an intensity of a signal received at a light receiving diode further changes depending on a temperature. Thus, in one embodiment, the signal is further evaluated for detecting a temperature of a fluid in the fluid carrying element. In other embodiments, an additional temperature sensor is provided, wherein a prevailing temperature is considered for evaluating the signal detected by the device. In this case it is possible for example to evaluate a functioning of the device by relating a sensed temperature to a signal change detected by the device.

In alternative or in addition, in one embodiment the light emitting device is adapted to emit a colored light and/or the light receiving device is a color sensitive light receiving device. In this embodiment it is further possible to detect the color of the fluid. For example, in a household appliance, different additive fluids can be associated with different colors, wherein by detection a color of the fluid, it is possible to determine whether a correct additive fluid is used. In one embodiment, a spectrum of colors is evaluated to gain further information, for example by means of a MEMS infrared spectrometer, which could be for example from Oto Photonics Micro Series.

In one embodiment, the emitting device and the receiving device are arranged at a distance from each other for example distanced along a longitudinal direction of a pipe or tube.

In an alternative embodiment, the emitting device and the receiving device are arranged in a common unit, wherein at least one wave signal reflector is provided for reflecting a wave signal emitted from the common unit back to the common unit. This allows for a small-scale design with little installation space required at the fluid carrying element. In case the wave signal is a visible or invisible light signal, the common unit is for example a photodiode configured to emit and receive a light signal.

In one embodiment, two receiving devices are provided, which are arranged upstream and downstream of a section of the fluid carrying element, in particular which are arranged upstream and downstream of a valve element of a valve unit. In this case it is for example further possible to evaluate whether an absence of a fluid downstream of a valve element detected by the device is caused by a mal-function of the valve element or by a mal-function of a fluid supply to the valve unit.

According to a second aspect, a valve system is provided, which comprises a valve unit adapted for restricting or preventing a flow of a fluid and a device for detecting a flow of a fluid through the valve unit. For this purpose, in one embodiment, the emitting device is arranged upstream the valve unit and the receiving device is arranged downstream of the valve unit, wherein an intensity of a signal received depends on a state of the valve unit. In other embodiments, the emitting device and the receiving device are both arranged downstream of the valve unit.

The valve unit can be any type of valve unit for preventing or restricting a flow of a fluid.

In one embodiment, the valve unit comprises a squeezable tube and a valve element, wherein the valve element is adapted for squeezing the squeezable tube in order to restrict or to prevent a flow through a section of the squeezable tube. Such a valve unit is described in not prepublished patent application DE 102019214481.0. The squeezable tube is for example made of silicone, which allows a good light injection into the fluid and/or light extraction from the fluid across a wall of the squeezable tube. In one embodiment, the wall of the tube is partly coated with a reflecting material.

In alternative or in addition, in one embodiment the squeezable tube is arranged inside an outer tube having a reflecting inner surface. The outer tube is for example a polished metal tube having a highly reflective inner surface. The metal tube in one embodiment is provided with cutouts for the light emitting device and the light receiving device and/or for the valve element. In one embodiment, the valve unit further comprises an actuator for moving the valve element. in particular an actuator having a material with a temperature-dependent coefficient of expansion and/or a material with a temperature induced shape memory effect. For example, such an actuator cooperates with the valve elements that below a defined threshold value, the valve elements are moved into a first state, in which the valve elements do not squeeze the squeezable tube, wherein in case the temperature exceeds the threshold value, the valve elements are moved by the actuator to squeeze the tube for reducing or preventing a flow through the squeezed section of the tube. In an alternative embodiment, such an actuator cooperates with the valve elements that above a defined threshold value, the valve elements are moved into a first state, in which the valve elements do not squeeze the squeezable tube, wherein in case the temperature falls below a the threshold value, the valve elements are moved by the actuator into a second state in which the valve elements squeeze the tube for reducing or preventing a flow through the squeezed section of the tube. The actuator in one embodiment is driven by an electrical signal, in particular, an electrical signal causing a heating of the material with a temperature-dependent coefficient of expansion and/or with a temperature induced shape memory effect. In other embodiments, in alternative or in addition the actuator is driven by thermal energy, in particular thermal energy of a fluid flowing through the valve unit. According to a third aspect, a dosing device is provided, which comprises a valve system as described above. The dosing device is for example used in a household appliance for adding an additive fluid or a detergent to a water supply.

According to a fourth aspect, a use of a device is provided for monitoring a flow of a fluid through a valve, in particular for monitoring a flow of a fluid through a valve unit in a household appliance. The use of such a device allows for a reliable monitoring of the function of the valve unit.

According to a fifth aspect, a household appliance is provided, which comprises a device for detecting a flow of a fluid through or a presence of a fluid in a fluid carrying element, such as a pipe, a tube, a valve, a chamber and/or a fitting, and/or a valve system.

### BRIEF DESCRIPTION OF THE DRAWINGS

In the following, embodiments of the invention will be described in detail with reference to the drawings. Throughout the drawings, the same elements will be denoted by the same reference numerals. The drawings schematically show
- Fig. 1: in a schematic view an embodiment of a valve system comprising a valve unit and a device for detecting a flow of a fluid through the valve unit,
- Fig. 2: in a schematic view an alternative embodiment of a device for detecting a flow of a fluid in a tube,
- Fig. 3: in a schematic view a dosing unit with a reservoir, a valve unit and a fresh water pipe,
- Fig. 4: in a schematic view a second embodiment with a dosing unit having two valve units and an intermediate chamber in between,
- Fig. 5: in a schematic sectional view of an embodiment of a reservoir for a dosing unit of Fig. 4 in isolation;
- Fig. 6: in a schematic sectional view of the reservoir of Fig. 5 with an intermediate chamber 54 after installation together;
- Fig. 7: in a schematic view a valve unit and a device for detecting a flow of a fluid through the valve unit in an open state,
- Fig. 8: in a schematic view the valve unit and the device of Fig. 7 in a closed state, and
- Fig. 9: in a schematic view another embodiment of a device for detecting a presence of a fluid in a chamber.

### DETAILED DESCRIPTION OF EMBODIMENTS OF THE INVENTION

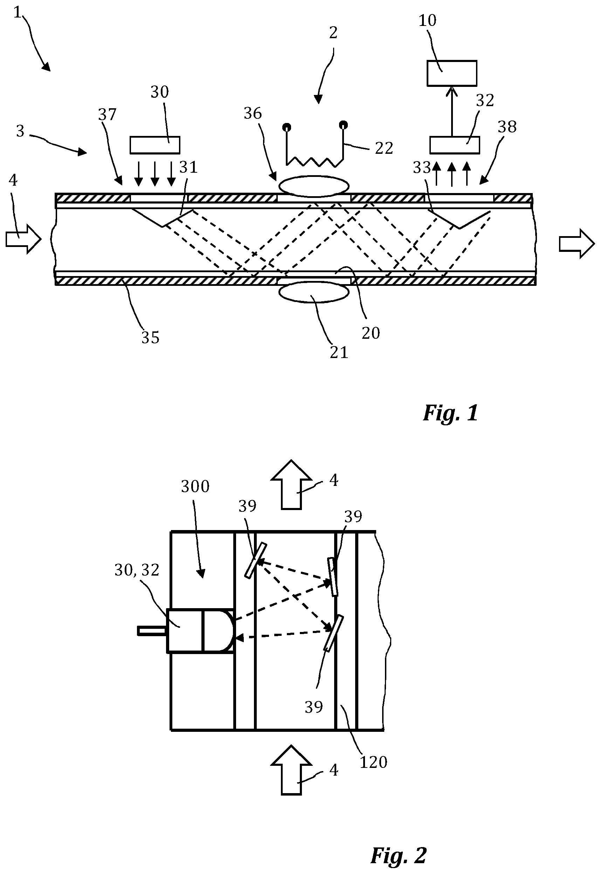

Fig. 1 shows in a schematic view an embodiment of a valve system 1 comprising a valve unit 2 and device 3 for detecting a flow of a fluid 4 through the valve unit 2. In the embodiment shown, the valve unit 2 comprises a squeezable tube 20 and a valve element 21 surrounding the squeezable tube 20 and adapted for squeezing the squeezable tube 20 for preventing a flow of a fluid through the squeezable tube 20. In the embodiment shown, the valve element 21 is driven by an actuator 22 having a material with a temperature-dependent coefficient of expansion and/or a temperature induced shape memory effect. Although the actuator 22 is schematically depicted as an electric heating element, the actuator may also be using a thermal energy for example a thermal energy radiated by the fluid 4 flowing through the tube 20.

The device 3 detects an absence or presence of a flow of the fluid 4 through the valve unit 2, and thus allows a monitoring of the valve unit 2. The device 3 comprises an emitting device, in the form of a light emitting device 30, for example a light-emitting diode (LED), configured to emit a light signal into the fluid 4, and a receiving device, in the form of a light receiving device 32 configured to receive the light signal emitted from the light emitting device 30 and transmitted by the fluid 4, wherein for example the light receiving device 32 is a photo diode that converts the light received into an electrical current.

The light emitting device 30 and the light receiving device 32 each comprise an optical element 31, 33 schematically shown as a prism. The optical elements 31, 33 are configured for a light injection into the fluid 4 and a light extraction from the fluid 4, respectably when the light emitting device 30 and the light receiving device 32 are arranged transverse to a longitudinal extension of the squeezable tube 20. The squeezable tube 20 is arranged in an outer tube 35 having a reflective inner surface. The outer tube 35 in one embodiment is made of a material having a higher rigidity than the squeezable tube 20, wherein cut-outs 36, 37, 38 are provided in the region of the valve elements 21 for allowing the valve element 21 to act on the squeezable tub 20 and in the regions of the light emitting device 30 and the light receiving device 32 for injection and extraction of light.

In case the valve element 21 is activated to squeeze the tube 20, a flow of the fluid 4 through the valve element 21 is restricted or prevented, thereby causing a change in the intensity of the light signal received by the light receiving device 32. The light receiving device 32 is connected to a controller. Thus, by evaluating an intensity of the light signal received by the light receiving device 32 in the controller, a status of the valve unit 2 can be monitored and/or a mal-function of the valve unit 2 can be detected.

Fig. 2 shows in a schematic view an alternative embodiment of a device 3 for detecting a flow of a fluid 4 through a tube 120. In the embodiment shown in Fig. 2, the device 3 for detecting a flow of a fluid also comprises an emitting device in the form of a light emitting device 30 configured to emit a light signal into the fluid 4, and a receiving device in the form of a light receiving device 32 configured to receive the light signal emitted from the light emitting device and transmitted by the fluid 4, which light emitting device 30 and light receiving device 32 in contrast to Fig. 1 are arranged in a common unit 300. The unit 300 is arranged at a surface of the tube 120. Further, several reflectors 39 are provided, which are configured and arranged to reflect a signal emitted from the common unit 300 back to the common unit 300. In case of a presence of a fluid in the tube 120, a light signal can be injected into the fluid 4, which is transmitted to the reflectors 39 and reflected by the reflectors 39 to the unit 300. An intensity of the transmitted, reflected and received signal depends on the medium present in the tube. In the embodiment shown, three reflectors 39 are provided. However, the number and arrangement of the reflectors 39 is only by way of example and various modifications are conceivable.

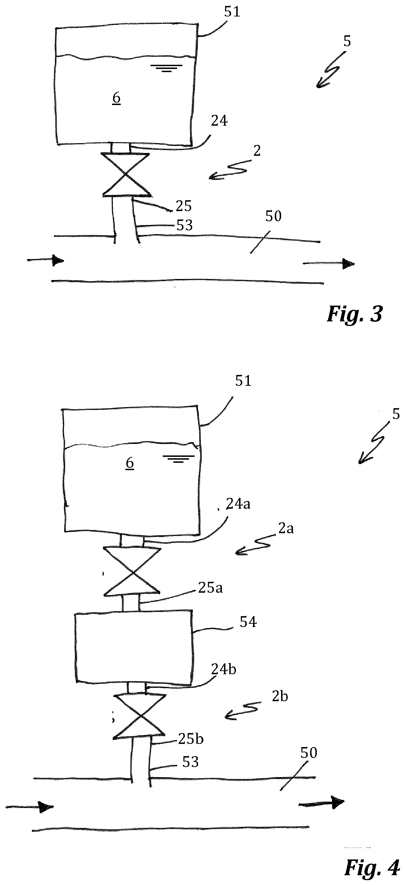

Fig. 3 shows in a schematic view a first embodiment of a dosing unit 5 for use in a household appliance, for example a dishwasher or washing machine (not shown), with a pipe 50, for example a fresh water pipe, for feeding fresh water to a cleaning chamber (not shown). The dosing unit 50 comprises a reservoir 51 which contains an additive fluid 6 to be used in a cleaning process. The additive fluid 6 for example is a cleaning agent, or alternatively an additive such as rinse aid, bleach, fabric softener or the like.

In order to feed the additive fluid 6 to the fresh water pipe 50, a valve unit 2 is provided. The valve unit 2 has a valve inlet 24, which is connected for example to the bottom of the reservoir 51. A valve outlet 25 from the valve unit 2 is connected to the fresh water pipe 50 via a pipe connection 53. In other embodiments, the pipe connection 53 is omitted and the vale outlet 25 is connected directly to the fresh water pipe 50.

In one embodiment, the reservoir 51 is provided with an air vent allowing air to flow into the reservoir 51 for pressure compensation. In an alternative embodiment, the valve unit 2 is a double lumen valve unit 2 allowing air to enter into the reservoir 51 when feeding the additive fluid 6 to the pipe 50.

Fig. 4 shows in a schematic view a second embodiment of a dosing unit 5 similar to Fig. 3, which in contrast to the embodiment of Fig. 3 has two valve units 2a, 2b, and an intermediate chamber 54 arranged between the two valve units 2a, 2b. More particular, a first valve unit 2a has a valve inlet 24a, which is connected to a bottom of a reservoir 51. A valve outlet 25a of the first valve unit 2a is connected to an inlet of the intermediate chamber 54. The second valve unit 2b has a valve inlet 24b which is connected to an outlet of the intermediate chamber 54. A valve outlet 25b of the second valve unit 2b is connected via a pipe connection 53 with the fresh water pipe 50. The intermediate chamber 54 allows a higher flexibility in the design of the reservoir 51.

In one embodiment, the reservoir 51 and the intermediate chamber 54 are both provided with an air vent allowing air to flow into the reservoir 51 and the pressure chamber 54 for pressure compensation. In an alternative embodiment, at least one of the first valve unit 2a and the second valve unit 2b is a double lumen valve unit 2 allowing air to enter into the reservoir 51 when feeding the additive fluid 6 to the pipe 50.

The reservoir 51 shown in Fig. 3 and 4 in one embodiment is in the form of a cartridge, which is replaceably mountable to a household appliance.

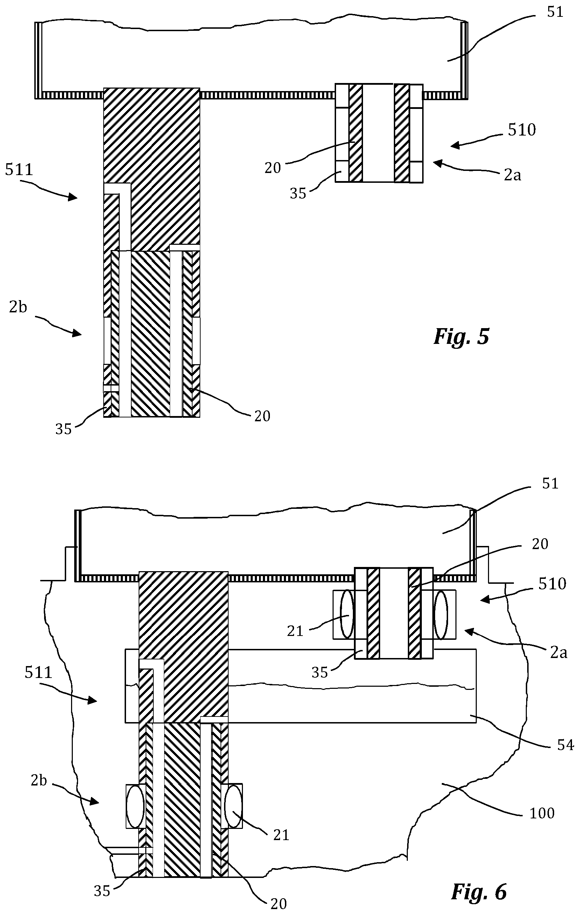

Fig. 5 and 6 schematically show, in isolation and together with an intermediate chamber 54, a detail of an embodiment of a reservoir 51 in the form of a cartridge having two coupling pins 510, 511. The intermediate chamber 54 for example forms part of a household appliance 100 (only schematically indicated in Fig. 6). In the embodiment shown, the first coupling pin 510 is provided with a first valve unit 2a, which in use connects the reservoir 51 to the intermediate chamber 54. The second coupling pin 511 comprises a second valve unit 2b, which in use for example connects the intermediate chamber 54 to a fresh water pipe 50 (see Fig. 3 and 4).

The first valve unit 2a and the second valve unit 2b each comprise a squeezable tube 20 and valve elements 21, which can be activated for squeezing the tube 20. In the embodiment shown, the valve elements 21 are part of the household appliance 100. In other embodiments, the valve elements 21 are integrated in the coupling pins 510, 511. An actuator for moving the valve elements 21 can be arranged in the coupling pins 510, 511 or the household appliance 100. In the embodiment shown, the second valve unit 2b is a double lumen valve unit 2b allowing air to enter into the intermediate chamber 54 when extracting a fluid from to intermediate chamber 54.

The squeezable tubes 20 of the first and the second valve unit 2a, 2b are both arranged inside a rigid tube 35, which in one embodiment also functions as an insertion aid when mounting the reservoir 51 to the household appliance 100. The rigid tubes 35 are in one embodiment made of metal, in particular polished metal allowing a light guidance as described above in the context of Fig. 1.

For monitoring the function of the valve units 2a, 2b at least one device 3 having a light emitting device 30 and a light receiving device 31 (not shown in Fig. 5 and 6) is provided.

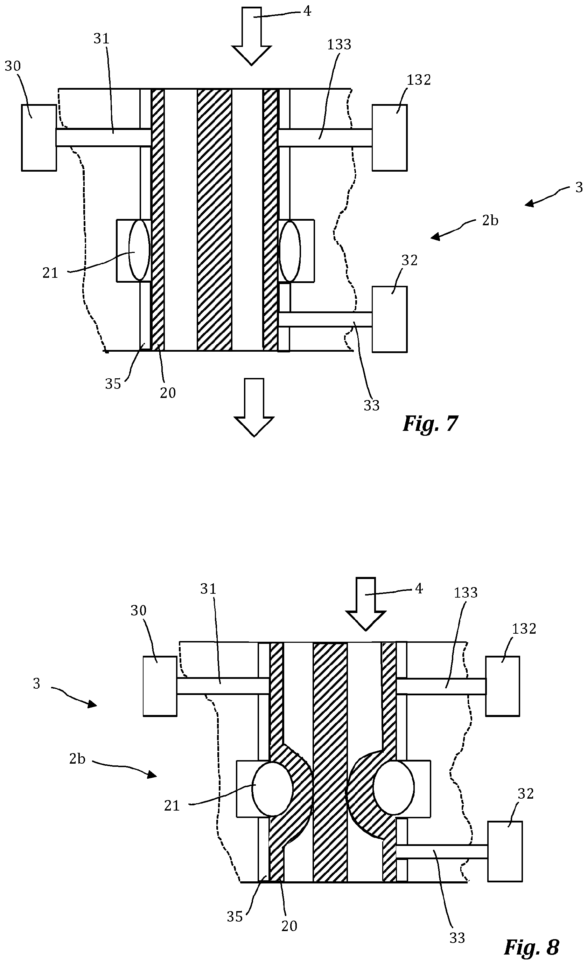

Fig. 7 and 8 show in schematic views the second valve unit 2b of Figs. 5 and 6 having a valve element 21 together with a device 3 for detecting a flow of a fluid through the valve unit 2a and the valve unit 2b of Figs. 5 and 6 in an open state and in a closed state of the valve unit 2b.

The device 3 shown in Figs. 7 and 8 comprises a light emitting device 30 configured to emit a light signal into the fluid 4, two light receiving devices 32, 132 configured to receive the light signal emitted from the light emitting device 30 and transmitted by a fluid 4, and three optical elements 31, 33, 133, which optical elements 31, 33, 133 are configured for a light injection into the fluid 4 and a light extraction from the fluid 4, respectably. The first light receiving device 132 is arranged upstream of the valve element 21, the second light receiving device 32 is arranged downstream of the valve element 21. In case the valve element 21 of the second valve unit 2b is not operated to squeeze the tube 20 and the valve unit 2b is in an open state as shown in Fig. 7, a light signal injected into the fluid 4 is transmitted by the fluid 4 to both, the first and the second light receiving element 32, 132. In case the valve element 21 is operated to squeeze the tube 20 and thereby restrict or prevent a flow of the fluid 4 through the valve element 21, as shown in Fig. 8, an intensity of a signal received by the second light receiving element 32 is reduced or no signal is received. However, in case a fluid 4 is present upstream the valve unit 2b, the signal at the first light receiving element 132 is still detectable. Hence, by evaluating the signals from the first and the second receiving element 132, 32, a mal-functioning of the second valve unit 2b can be detected and/or a state of the valve unit 2b can be evaluated. Further, by evaluating the signal from the first receiving element 132, a lack of a fluid 4 upstream the second valve unit 2b can be detected, which may be caused by a mal-functioning of the first valve unit 2a (see Fig. 5 and 6) or an empty reservoir 51 (see Fig. 5 and 6).

In operation of the household appliance, in one embodiment the signals detected by the device 3 are combined with further information, for example time signals and/or temperature signals, for a monitoring of the operation of the household appliance.

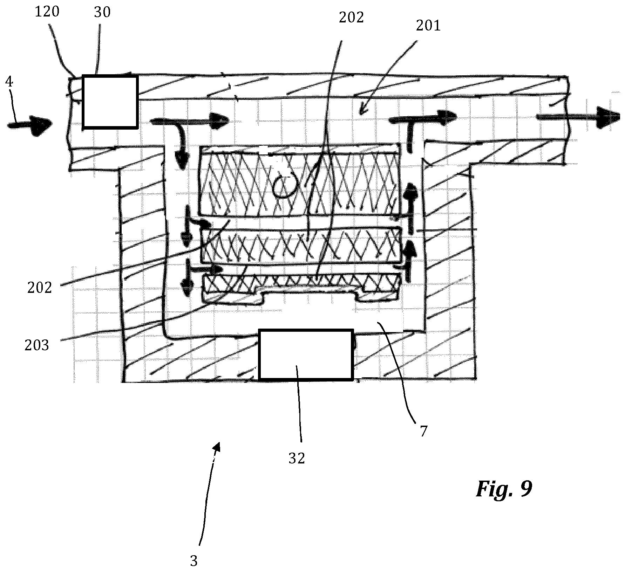

In addition or in alternative to the use of the device 3 for detecting a flow through a valve unit as described above, the device 3 for detecting a flow of a fluid through a passage or a presence of a fluid can also be combined with further devices. For example, Fig. 9 shows in a schematic view a sensor chamber 7 arranged in parallel to a main duct 201 of a tube 120 as described for example in DE 102018205502 A1, the content of which is herewith incorporated by reference. The sensor chamber 7 is part of a U-shaped duct, which channels off the main duct 201 and leads back into the main duct 201 such that a fluid 4 flows through the main duct 201 of the tube 120 as well as through the sensor chamber 7. In the embodiment shown, two bypass ducts 202, 203 are provided, which have the effect that a flow of the fluid 4 through the sensor chamber 7 is slowed down. In alternative or in addition walls 204 separating the bypass ducts 202, 203 from each other and/or from the main duct 201 and/or the sensor chamber 7 are made of a porous material. In general, different sensors can be arranged in the sensor chamber 7, for example a turbidity sensor and a pH sensor (not shown), wherein due to the reduced speed of flow a measurement quality can be improved.

In order to ensure that a fluid 4 is present in the sensor chamber 7, the device 3 is provided for detecting a presence of a fluid in the sensor chamber 7. The device 3 shown in Fig. 9 comprises a light emitting device 30 configured to emit a light signal into the fluid 4, which is arranged in the main duct 201 of the tube 120 and a light receiving device 32 configured to receive the light signal emitted from the light emitting device 30, which is arranged in the sensor chamber 6. It will be apparent to the skilled person that the device shown in Fig. 9 could be combined with a valve unit 2, 2a, 2b describe above, wherein in one embodiment the light emitting device 30 is arranged upstream of a valve element 21 of the valve unit 2, 2a, 2b. In other embodiments, the valve element 21 is arranged upstream of the light emitting device 30.

Throughout this specification and the following claims the indefinite article "a" or "an" means "one or more". Reference to "a first element" does not mandate presence of a second element. Further, the expressions "first" and "second" are only intended to distinguish distinct elements and not to define any order or relevance.

While the present invention has been described with reference to exemplary embodiments, it will be readily apparent to those skilled in the art that the invention is not limited to the disclosed or illustrated embodiments but, on the contrary, is intended to cover numerous other modifications that are included within the scope of the following claims.

## Claims

1. A device for detecting a flow of a fluid (4) through or a presence of a fluid (4) in a fluid carrying element, such as a pipe, a tube, a valve, a chamber and/or a fitting, comprising:
- an emitting device configured to emit a wave signal into a fluid (4), which wave signal is transmittable by the fluid (4), wherein the emitting device comprises at least one coupling element configured for an injection of the wave signal into the fluid when the emitting device is arranged transverse to a longitudinal extension of the fluid carrying element, and
- a receiving device configured to receive the wave signal emitted from the emitting device and transmitted by the fluid (4), wherein the receiving device comprises at least one coupling element configured for an extraction of the wave signal from the fluid when the receiving device is arranged transverse to a longitudinal extension of the fluid carrying element,
**characterized in that**
- the emitting device is a light emitting device (30) configured to emit a visible or invisible light signal and the receiving device is a light receiving device (32) configured to receive the light signal emitted from the light emitting device (30), wherein the at least one coupling element configured for an injection of the wave signal into the fluid is an optical element (31) configured for a light injection into the fluid, and the at least one coupling element configured for an extraction of the wave signal from the fluid is an optical element (33, 133) configured for a light extraction from the fluid.

2. The device according to claim 1, **characterized in that** the at least one coupling element of the light emitting device (30) is configured for a light injection into the fluid when the emitting device (30) is arranged perpendicular to the longitudinal extension of the fluid carrying element.

3. The device according to claim 1 or 2, **characterized in that** the at least one coupling element of the light receiving device (32) is configured for a light extraction of the wave signal from the fluid, when the receiving device (32) is arranged perpendicular to the longitudinal extension of the fluid carrying element.

4. The device according to any one of claims 1 to 3, **characterized in that** the light emitting device (30) is a light emitting diode and/or the light detecting device (32) is a light receiving diode.

5. The device according to any one of claims 1 to 4, **characterized in that** the light emitting device (30) is adapted to emit a colored light and/or the light receiving device (32) is a color sensitive light receiving device.

6. The device according to any one of claims 1 to 5, **characterized in that** the light emitting device (30) and the light receiving device (32) are arranged in a common unit (300), wherein at least one wave signal reflector (39) is provided for reflecting a light signal emitted from the common unit (300) back to the common unit (300).

7. The device according to any one of claims 1 to 6, **characterized in that** two light receiving devices (32, 132) are provided, which are arranged upstream and downstream of a section of the fluid carrying element.

8. The device according to claim 7, **characterized in that** the two light receiving devices (32, 132) are arranged upstream and downstream of a valve element (21) of a valve unit (2).

9. A valve system comprising a valve unit (2) adapted for restricting or preventing a flow of a fluid and a device (3) according to any one of claims 1 to 8.

10. The valve system according to claim 9, **characterized in that** the valve unit comprises a squeezable tube and a valve element, wherein the valve element is adapted for squeezing the squeezable tube in order to restrict or to prevent a flow through a section of the squeezable tube.

11. The valve system according to claim 10, **characterized in that** the squeezable tube is arranged inside an outer tube having a reflecting inner surface.

12. The valve system according to claim 10 or 11, **characterized in that** the valve unit further comprises an actuator for moving the valve element, in particular an actuator comprising a material with a temperature-dependent coefficient of expansion and/or a material with a temperature induced shape memory effect.

13. A dosing device comprising a valve system according to any one of claims 9 to 12.

14. Use of a device according to any one of claims 1 to 8 for monitoring a flow of a fluid (4) through a valve, in particular for monitoring a flow of a fluid through a valve unit in a household appliance.

15. Household appliance comprising a device according to any one of claims 1 to 8 for detecting a flow of a fluid (4) through or a presence of a fluid (4) in a fluid carrying element, such as a pipe, a tube, a valve, a chamber and/or a fitting, and/or a valve system according to any one of claims 9 to 12.

## Patentansprüche

1. Vorrichtung zum Erfassen einer Strömung eines Fluids (4) durch ein fluidführendes Element, wie z. B. ein Rohr, einen Schlauch, ein Ventil, eine Kammer und/oder eine Armatur, oder des Vorhandenseins eines Fluids (4) darin, Folgendes umfassend:
- eine Sendevorrichtung, die so konfiguriert ist, dass sie ein Wellensignal in ein Fluid (4) aussendet, wobei das Wellensignal durch das Fluid (4) übertragbar ist, wobei die Sendevorrichtung mindestens ein Kopplungselement umfasst, das für eine Einleitung des Wellensignals in das Fluid konfiguriert ist, wenn die Sendevorrichtung quer zu einer Längserstreckung des fluidführenden Elements angeordnet ist, und
- eine Empfangsvorrichtung, die so konfiguriert ist, dass sie das von der Sendevorrichtung ausgesendete und von dem Fluid (4) übertragene Wellensignal empfängt, wobei die Empfangsvorrichtung mindestens ein Kopplungselement umfasst, das für eine Extraktion des Wellensignals aus dem Fluid konfiguriert ist, wenn die Empfangsvorrichtung quer zu einer Längserstreckung des fluidführenden Elements angeordnet ist,
**dadurch gekennzeichnet, dass**
- die Sendevorrichtung eine lichtemittierende Vorrichtung (30) ist, die so konfiguriert ist, dass sie ein sichtbares oder unsichtbares Lichtsignal emittiert, und die Empfangsvorrichtung eine lichtempfangende Vorrichtung (32) ist, die so konfiguriert ist, dass sie das von der lichtemittierenden Vorrichtung (30) emittierte Lichtsignal empfängt, wobei das mindestens eine Kopplungselement, das für eine Einleitung des Wellensignals in das Fluid konfiguriert ist, ein optisches Element (31) ist, das für eine Lichteinleitung in das Fluid konfiguriert ist, und das mindestens eine Kopplungselement, das für eine Extraktion des Wellensignals aus dem Fluid konfiguriert ist, ein optisches Element (33, 133) ist, das für eine Lichtextraktion aus dem Fluid konfiguriert ist.

2. Vorrichtung nach Anspruch 1, **dadurch gekennzeichnet, dass** das mindestens eine Koppelelement der lichtemittierenden Vorrichtung (30) für eine Lichteinleitung in das Fluid konfiguriert ist, wenn die Sendevorrichtung (30) senkrecht zur Längserstreckung des fluidführenden Elements angeordnet ist.

3. Vorrichtung nach Anspruch 1 oder 2, **dadurch gekennzeichnet, dass** das mindestens eine Koppelelement der lichtempfangenden Vorrichtung (32) für eine Lichtextraktion des Wellensignals aus dem Fluid konfiguriert ist, wenn die Empfangseinrichtung (32) senkrecht zur Längserstreckung des fluidführenden Elements angeordnet ist.

4. Vorrichtung nach einem der Ansprüche 1 bis 3, **dadurch gekennzeichnet, dass** die lichtemittierende Vorrichtung (30) eine lichtemittierende Diode ist und/oder die lichterfassende Vorrichtung (32) eine lichtempfangende Diode ist.

5. Vorrichtung nach einem der Ansprüche 1 bis 4, **dadurch gekennzeichnet, dass** die lichtemittierende Vorrichtung (30) dafür geeignet ist, ein farbiges Licht zu emittieren, und/oder dass die lichtempfangende Vorrichtung (32) eine farbempfindliche lichtemittierende Vorrichtung ist.

6. Vorrichtung nach einem der Ansprüche 1 bis 5, **dadurch gekennzeichnet, dass** die lichtemittierende Vorrichtung (30) und die lichtempfangende Vorrichtung (32) in einer gemeinsamen Einheit (300) angeordnet sind, wobei mindestens ein Wellensignalreflektor (39) zur Reflexion eines von der gemeinsamen Einheit (300) ausgesendeten Lichtsignals zu der gemeinsamen Einheit (300) vorgesehen ist.

7. Vorrichtung nach einem der Ansprüche 1 bis 6, **dadurch gekennzeichnet, dass** zwei lichtempfangende Vorrichtungen (32, 132) vorgesehen sind, die stromaufwärts und stromabwärts eines Abschnitts des fluidführenden Elements angeordnet sind.

8. Vorrichtung nach Anspruch 7, **dadurch gekennzeichnet, dass** die beiden lichtempfangenden Vorrichtungen (32, 132) stromaufwärts und stromabwärts eines Ventilelements (21) einer Ventileinheit (2) angeordnet sind.

9. Ventilsystem mit einer Ventileinheit (2), die zur Begrenzung oder Verhinderung einer Fluidströmung geeignet ist, und einer Vorrichtung (3) nach einem der Ansprüche 1 bis 8.

10. Ventilsystem nach Anspruch 9, **dadurch gekennzeichnet, dass** die Ventileinheit einen zusammendrückbaren Schlauch und ein Ventilelement umfasst, wobei das Ventilelement zum Zusammendrücken des zusammendrückbaren Schlauchs geeignet ist, um einen Durchfluss durch einen Abschnitt des zusammendrückbaren Schlauchs zu beschränken oder zu verhindern.

11. Ventilsystem nach Anspruch 10, **dadurch gekennzeichnet, dass** der zusammendrückbare Schlauch innerhalb eines Außenschlauchs mit einer reflektierenden Innenfläche angeordnet ist.

12. Ventilsystem nach Anspruch 10 oder 11, **dadurch gekennzeichnet, dass** die Ventileinheit ferner einen Aktuator zum Bewegen des Ventilelements umfasst, insbesondere einen Aktuator aus einem Material mit einem temperaturabhängigen Ausdehnungskoeffizienten und/oder einem Material mit einem temperaturinduzierten Formgedächtniseffekt.

13. Dosiervorrichtung mit einem Ventilsystem nach einem der Ansprüche 9 bis 12.

14. Verwendung einer Vorrichtung nach einem der Ansprüche 1 bis 8 zur Überwachung eines Durchflusses eines Fluids (4) durch ein Ventil, insbesondere zur Überwachung eines Durchflusses eines Fluids durch eine Ventileinheit in einem Haushaltsgerät.

15. Haushaltsgerät mit einer Vorrichtung nach einem der Ansprüche 1 bis 8 zum Erfassen einer Strömung eines Fluids (4) durch ein fluidführendes Element, wie z. B. ein Rohr, einen Schlauch, ein Ventil, eine Kammer und/oder eine Armatur, oder eines Vorhandenseins eines Fluids (4) darin, und/oder ein Ventilsystem nach einem der Ansprüche 9 bis 12.

## Revendications

1. Un dispositif de détection de l'écoulement d'un fluide (4) ou de la présence d'un fluide (4) dans un élément transporteur de fluide, tel qu'un tuyau, un tube, une vanne, une chambre et/ou un raccord, comprenant :
- un dispositif émetteur configuré pour émettre un signal d'onde à travers un fluide (4), lequel signal d'onde peut être transmis par le fluide (4), sachant que le dispositif émetteur comprend au moins un élément de couplage configuré pour injecter le signal d'onde dans le fluide quand le dispositif émetteur est disposé transversalement à une extension longitudinale de l'élément transporteur de fluide, et
- un dispositif récepteur configuré pour recevoir un signal d'onde émis par le dispositif émetteur et transmis par le fluide (4), sachant que le dispositif récepteur comprend au moins un élément de couplage configuré pour extraire le signal d'onde du fluide quand le dispositif récepteur est disposé transversalement à une extension longitudinale de l'élément transporteur de fluide,
**caractérisé en ce que**
- le dispositif émetteur est un dispositif émetteur de lumière (30) configuré pour émettre un signal lumineux visible ou invisible et le dispositif récepteur est un dispositif récepteur de lumière (32) configuré pour recevoir le signal lumineux émis par le dispositif émetteur de lumière (30), sachant que ledit au moins un élément de couplage configuré pour injecter le signal d'onde dans le fluide est un élément optique (31) configuré pour une injection de lumière dans le fluide, et que ledit au moins un élément de couplage configuré pour extraire le signal d'onde du fluide est un élément optique (33, 133) configuré pour une extraction de lumière hors du fluide.

2. Le dispositif conformément à la revendication 1, **caractérisé en ce que** ledit au moins un élément de couplage du dispositif émetteur de lumière (30) est configuré pour injecter de la lumière dans le fluide quand le dispositif émetteur (30) est disposé perpendiculairement à l'extension longitudinale de l'élément transporteur de fluide.

3. Le dispositif conformément à la revendication 1 ou 2, **caractérisé en ce que** ledit au moins un élément de couplage du dispositif émetteur de lumière (32) est configuré pour une extraction de lumière du signal d'onde hors du fluide quand le dispositif récepteur (32) est disposé perpendiculairement à l'extension longitudinale de l'élément transporteur de fluide.

4. Le dispositif selon l'une des revendications 1 à 3, **caractérisé en ce que** le dispositif émetteur de lumière (30) est une diode électroluminescente et/ou que le dispositif de détection de lumière (32) est une diode réceptrice de lumière.

5. Le dispositif selon l'une des revendications 1 à 4, **caractérisé en ce que** le dispositif émetteur de lumière (30) est adapté pour émettre une lumière colorée et/ou que le dispositif de réception de lumière (32) est une diode réceptrice de lumière, sensible aux couleurs.

6. Le dispositif selon l'une des revendications 1 à 5, **caractérisé en ce que** le dispositif émetteur de lumière (30) et le dispositif récepteur de lumière (32) sont disposés dans une unité commune (300), sachant qu'au moins un réflecteur de signal d'onde (39) est fourni pour réfléchir un signal lumineux émis par l'unité commune (300) pour le retourner à l'unité commune (300).

7. Le dispositif selon l'une des revendications 1 à 6, **caractérisé en ce que** deux dispositifs récepteurs de lumière (32, 132) sont fournis, lesquels sont disposés en amont et en aval d'une section de l'élément transporteur de fluide.

8. Le dispositif conformément à la revendication 7, **caractérisé en ce que** les deux dispositifs récepteurs de lumière (32, 132) sont disposés en amont et en aval d'un élément à vanne (21) d'une unité de vanne (2).

9. Un système de vanne comprenant une unité de vanne (2) adaptée pour restreindre ou empêcher l'écoulement d'un fluide et un dispositif (3) selon l'une des revendications 1 à 8.

10. Le système de vanne selon la revendication 9, **caractérisé en ce que** l'unité de vanne comprend un tube compressible et un élément de vanne, sachant que l'élément de vanne est adapté pour compresser le tube compressible afin de restreindre ou d'empêcher un écoulement à travers une section du tube compressible.

11. Le système de vanne conformément à la revendication 10, **caractérisé en ce que** le tube compressible est disposé à l'intérieur d'un tube extérieur ayant une surface intérieure réfléchissante.

12. Le système de vanne selon la revendication 10 ou 11, **caractérisé en ce que** l'unité de vanne comprend également un actionneur pour déplacer l'élément de vanne, en particulier un actionneur comprenant un matériau avec un coefficient de dilatation dépendant de la température et/ou un matériau avec un effet de mémoire de forme induit par la température.

13. Un dispositif doseur comprenant un système de vanne selon l'une des revendications 9 à 12.

14. Utilisation d'un dispositif selon l'une des revendications 1 à 8 pour surveiller l'écoulement d'un fluide (4) à travers une vanne, en particulier pour surveiller l'écoulement d'un fluide à travers une unité de vanne dans un appareil ménager.

15. Appareil ménager comprenant un dispositif selon l'une des revendications 1 à 8 pour détecter l'écoulement d'un fluide (4) ou la présence d'un fluide (4) dans un élément transporteur de fluide, tel qu'un tuyau, un tube, une vanne, une chambre et/ou un raccord, et/ou un système de vanne selon l'une des revendications 9 à 12.
